**Europäisches Patentamt**

**European Patent Office**

**Office européen des brevets**

(19)

(11) Publication number: **0 038 974** A2

(12)    # EUROPEAN PATENT APPLICATION

(21) Application number: **81102702.8**

(22) Date of filing: **09.04.81**

(51) Int. Cl.³: **B 29 C 27/28**
     **F 16 L 59/02**

(30) Priority: **24.04.80 IT 4156080**

(43) Date of publication of application:
     **04.11.81 Bulletin 81/44**

(84) Designated Contracting States:
     **AT BE CH DE FR GB LI LU NL SE**

(71) Applicant: **ZEMA S.p.A.**
     **Via Vicenza**
     **I-31050 Vedelago (Province of Treviso)(IT)**

(72) Inventor: **Zecchin, Vittorio**
     **Via Barison, 6/a**
     **I-35010 Onara (Province of Padova)(IT)**

(74) Representative: **Modiano, Guido et al,**
     **MODIANO & ASSOCIATI S.A.S. Via Meravigli, 16**
     **I-20123 Milan(IT)**

(54) Method and apparatus for coating metal pipes with plastics materials, and coated metal pipes obtained thereby.

(57) A method and apparatus are disclosed for covering a metal pipe, particularly of the type utilized in modern heating systems, with a continuous covering of a pre-cut web of foamed plastics material which is folded around the pipe and sealed along its contacting edges. Over said foam, an impervious and nonpermeable film is then extruded serving the dual function of an insulating finish and casing for the insulated pipe. The coating apparatus comprises a station (10, 11, 12) for pre-heating a foamed plastics material web (5), wrapping the web around a metal pipe (1) and sealing or welding the web edges, a pipe cooling station equipped with sleeves (16, 17, 18) wherethrough cooling compressed air is circulated and a web covering station (31) for covering the web (5) by continuously extruding a thermoplastics material thereon in such a way as to form a strong protective film on the web coating the pipe (1). Thus a doubly coated metal pipe is obtained having enhanced thermal characteristics, and lends itself excellently for the implementation of space heating systems in conformity with current regulations on the reduction of energy consumption.

./...

COMPLETE DOCUMENT

Fig. 1

This invention relates to a method for coating metal pipes with foamed plastics and a plastics film an apparatus implementing said method, and coated metal pipes obtained thereby.

In investigating ways of reducing energy consumption, the losses inherent to poor insulation of heating systems have been carefully evaluated both from the technical standpoint and from the standpoint of recently enforced restrictive regulations.

The present invention involves such investigations, and concerns a solution arrived at in an optimum manner by providing metal pipes with a coat or covering of foamed plastics materials, such as to achieve high insulating properties and a low coefficient of thermal transmissivity and dissipation.

The invention sets out to provide a method which enables a metal pipe to be coated or covered continuously with a plastics foam product which has been previously cut into a web or band of convenient width.

Within this task it is an object of the invention to accomplish a perfect and homogeneous adhesion of said plastics material to the pipe, and sealing thereof, such as not to form discontinuities likely to create thermal bridges which can adversely affect the quality of the insulation.

A further object is to provide an apparatus which can operate in a substantially automatic manner to carry out both the coating of the pipe with a foam layer and the optional further covering of the whole assembly with an impervious and non-permeable film.

Yet another object is that of achieving a coated pipe product, which has excellent thermal insulation characteristics and can be at the same time easily handled and utilized by the installer.

Yet another object of this invention is that of providing an apparatus and a plastics coated metal pipe which are economically favorable and return-making.

According to one aspect of the present invention the aforesaid task and objects and yet other objects, such as will be apparent hereinafter, are achieved by a method for coating metal pipes with plastics foam and film, characterized in that it comprises the steps of:

a) providing a web of foamed plastics material having a width equal to the length of a pipe to be coated;

b) pre-heating said web;

c) inserting said web along with said pipe into a partially open conical element to cause the web to adhere on the pipe and bring the edges thereof into contact along a generatrix of said pipe;

d) heating, by means of a hot fluid, said web contacting edges up to a softening temperature to thus cause said edges to weld together;

e) holding said web in contact with said pipe inside consecutively arranged sleeves the inner surfaces whereof have a plurality of holes wherethrough pressurized air is admitted to create a fluid layer having a low friction coefficient and enabling the thus coated pipe to be cooled and easily fed forward;

f) coating, on a continuous extrusion press, said web as wrapped around said pipe with a thermoplastics material forming a continuous covering film; and

g) cooling said covering film down to room temperature.

According to another aspect of the present invention there is provided an apparatus for implementing the foregoing method, characterized in that it comprises a station for pre-heating the web, wrapping said web around the pipe, and sealing or welding the web edges after said edges have been brought into mutual contact relationship, a pipe cooling station equipped with cylindrical sleeves wherethrough compressed air is circulated, and a web covering station for covering said web by continuously extruding a thermoplastics material thereon to form a film on said web.

Thus, according to the invention, a metal pipe is provided coated with a highly thermally insulating layer of foamed plastics material, enclosed within a protective and continuous strong impervious film.

Further features and advantages of the invention will be more readily understood from the following detailed description of the method, apparatus and product according to this invention, as illustrated by way of example only in the accompanying drawings, where:

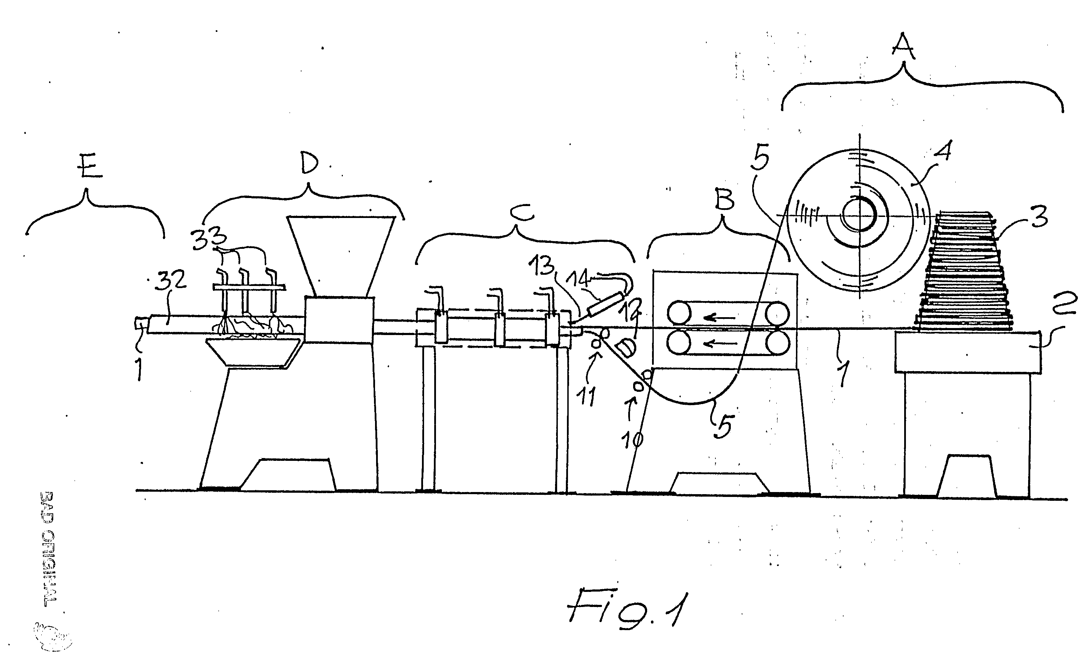

Figure 1 shows a general layout of the metal pipe coating apparatus according to the invention;

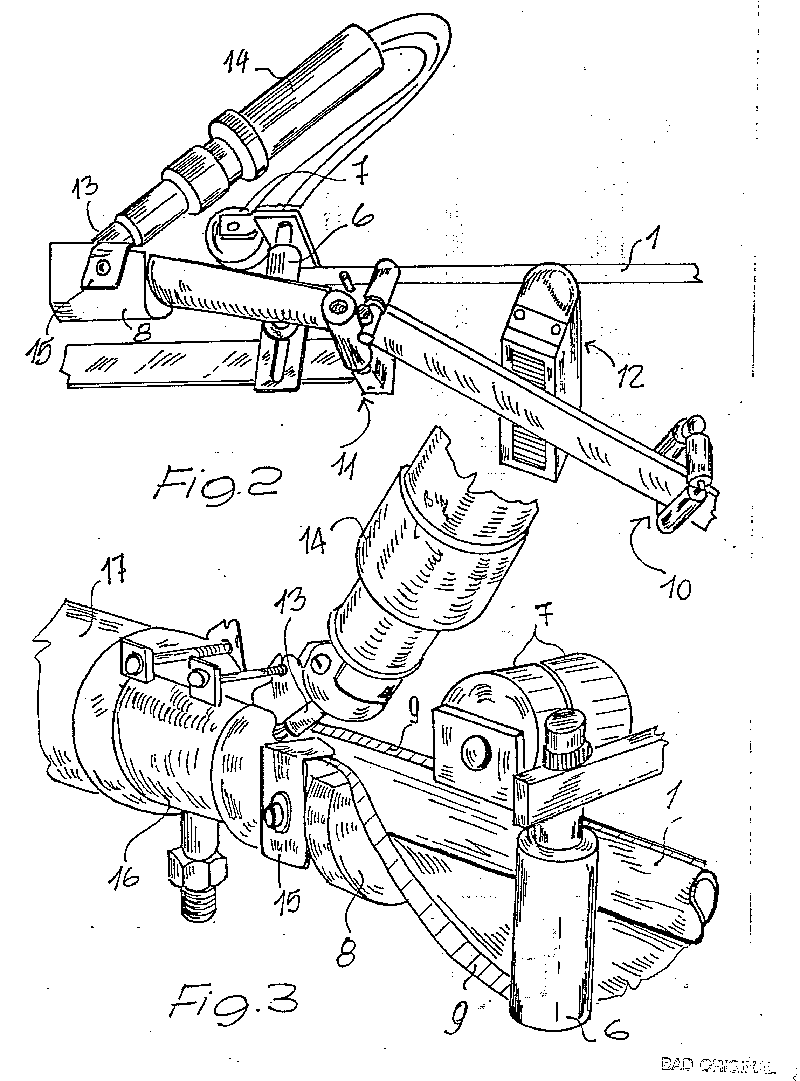

Figure 2 shows the station for wrapping and welding, or sealing, a foamed web around a metal pipe;

Figure 3 is a detail view of the heat welding element;

Figure 4 is a partly sectional view of the coated pipe cooling and guiding sleeves;

Figure 5 is a sectional view, taken on a plane V-V, of the coated pipe cooling and guiding sleeves;

Figure 6 illustrates the extruding station of the apparatus for extruding the coating in the form of non-permeable film adhering to the foamed web; and

Figure 7 is a partly sectional view of the obtained coated pipe.

With reference to the cited drawing figures, the apparatus according to this invention, as suitable for implementing the inventive method, comprises a metal pipe feed station A whereat a metal pipe 1, e.g. of copper, is unwound from a reel 2 loaded with and carrying a skein or pipe coil 3. That same station also accommodates reels 4 of foamed plastics web 5, preferably as formed from polyethylene or any desired heat sealable and weldable material.

Downstream of said station A, in the direction of movement of the pipe being coated, there is provided a pipe feeding and straightening station B, followed by a unit C for turning and welding, or sealing, the foam web 5, and by a continuous extrusion station D, whereat a covering polyethylene film is heat extruded onto the upturned foam web; successively thereto, at a cooling station E, the cooling of the finished coated pipe is completed.

The stations A and B include ordinary items of equipment for metal pipe working plants, and accordingly will be no further described; it is to be noted, however, that at the station B, the pipe is perfectly straightened and simultaneously fed forward at a desired speed.

The pipe 1, after the straightening process, is guided by a pair of idle side rollers 6 and an additional idle top roller 7 such that it is inserted into a partially open cone element 8, whereon, along with the pipe 1, the web 5 is led in and frictionally entrained onto the pipe.

Owing to the shape of the cone 8, the web 5 is turned up to completely enclose the pipe 1, and its side edges 9 are brought into mutual contact.

Prior to the above, the web 5 is guided by means of a first and second guiding roller set 10 and 11 respectively. At an intermediate area between such guiding roller sets, there may be provided a heating element 12, which may be a suitable gas burner, effective to pre-heat the web 5, thereby the bending of the latter toward the pipe 1 is facilitated and the web is made more formable and its straightening stresses can be relieved.

At the point where the two edges 9 contact each other, namely at the vertex of the opening of the partially open cone 8, there is inserted the nozzle 13 of an air heater 14 which blows hot air against said edges. 9

Owing to the localized application of heat, said edges 9 reach a temperature which makes them plastic and adhesive, thereby they are caused to be bonded to each other.

To prevent the edges 9 from inserting themselves into the half cone 8 in an incorrect attitude with respect to the nozzle 13, two edge guiding blades 15 are provided which are effective to control their attitude.

After this step of mutual welding of the edges 9, the pipe 1, already wrapped by the foam web 5, enters in succession containment and cooling sleeves the first whereof is indicated at 16, the second at 17 and the third at 18.

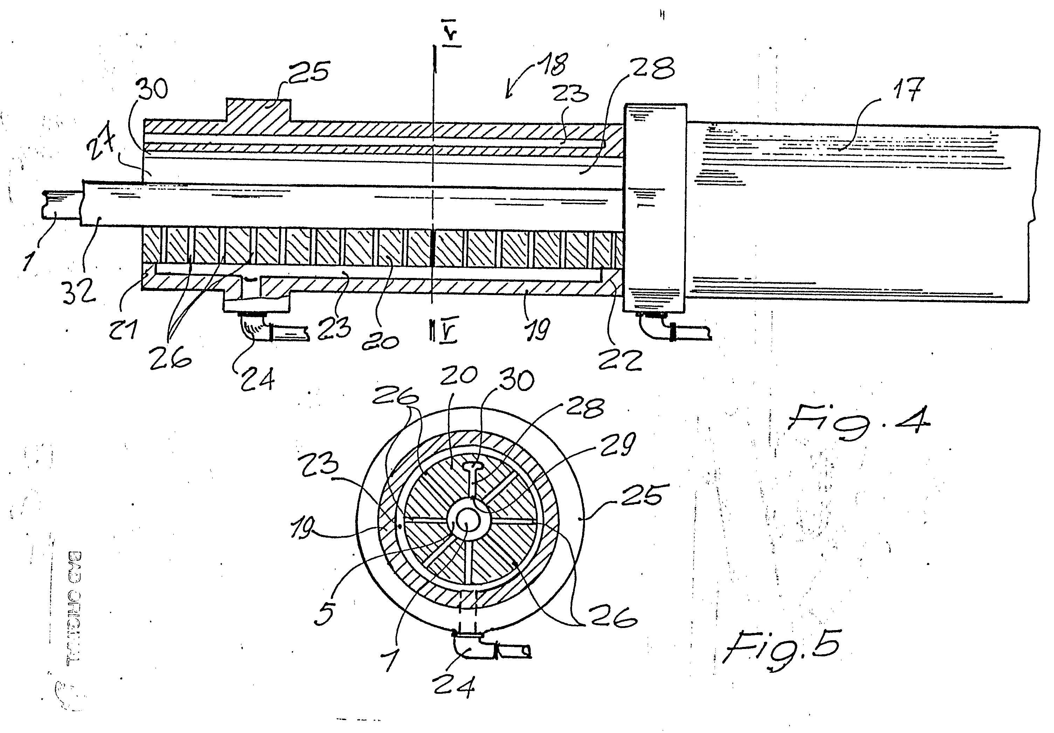

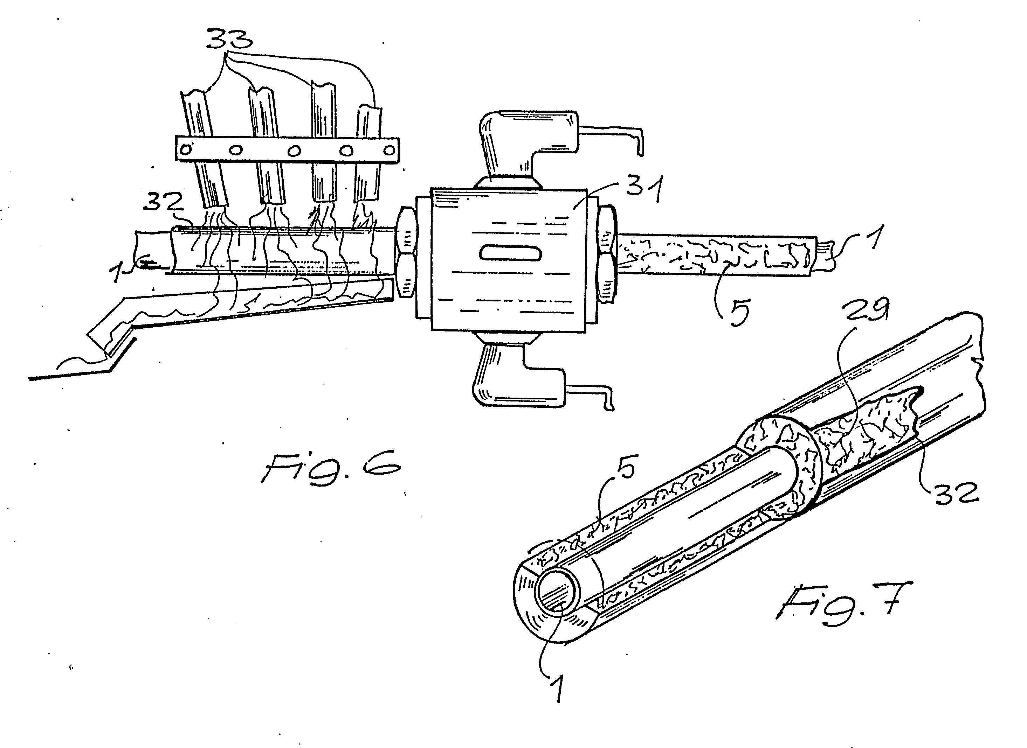

Said sleeves are substantially similar and comprise, as shown more clearly in Figures 4 and 5, an outer cylindrical body 19, whereinto is inserted a cylinder at 20, which is only secured to the heads 21 and 22, whilst throughout the length between said cylinder 21 and said outer cylindrical body 19, there is formed an annular chamber 23 wherein air at an adjustable pressure is introduced through a fitting 24 threaded onto a suitably provided outer ring 25 of oversize diameter.

Said cylinder 20 is provided with a series of closely spaced radial holes 26 which allow the air to enter the axial bore 27 of the cylinder.

Since into said axial bore 27 the pipe 1 covered with the foam web 5 is introduced, there is formed, owing to the admission of pressurized air, a fluid layer effective to separate the foam web 5, which acts as a covering for the pipe 1, thus minimizing drag and maintaining the web 5 pressed against the pipe 1, and in particular pressing the two edges 9 such as to allow them to cool and accordingly to firmly adhere together. The admitted air which constitutes the fluid layer is collected through a longitudinal slot 28, located exactly at the weld 29 of the edges 9, and discharged to the outside through a hole 30 formed in the head of each sleeve.

The combined effects of using a low surface friction coefficient material and creating a fluid layer of compressed air enable, on one hand, the coated pipe to be fed forward with a reduced effort, and on the other hand, the edges being cemented to be firmly pressed against each other and cooled such as to achieve a perfect and stable cementing.

The pipe 1, as covered with the foam web 5, is then introduced into the head 31 of a continuous extrusion press which covers the web 5 with molten thermoplastics material thereby forming a covering film 32 which completely encloses the web covered pipe 1.

Downstream of said head 31, the pipe is cooled under sprinkled water from a plurality of small tubings 33 arranged in line with and above the path of movement of the pipe 1.

As regards the materials used, in the instance of insulated pipes for space heating systems, the metal pipe (of copper, aluminum, etc.) is wound with a closed cell polyethylene foam web which is precut with bevelled edges for mating contact after their turning up.

The continuous extrusion press also works polyethylene which is arranged to cover the foam continuously, thus forming a film which is hole or pore-free.

The closed cell polyethylene foam web, of a suitably selected thickness, has low heat transmissivity, and the continuous film covering, of an impermeable nature and good strength, protects the insulation from damage during the installation process.

Said film covering is not made necessary for pipe insulating purposes, although it does contribute somewhat to the insulation, but rather by important considerations of subsequent utilization of the pipe, particularly during the bending operations, which may induce anomalous stresses in the foam and cause local separation or cracking inside the wall recesses wherein such pipes are usually installed.

The perforated sleeves may be formed from TEFLON or any other equivalent material, as indicated, such as to minimize the problem of frictional drag and provide repulsive features for other materials, thereby the edges, as softened by the hot air jet, cannot adhere to the sleeve inner walls.

Based upon the same inventive concept, there may be introduced several other improvements, and other materials may be used for the sleeves, such as steel and bronze alloys.

As a further example, or alternatively to the preheating of the foam web, the metal pipe may be preheated, to thus achieve the same effect until the web is fully cemented on the pipe.

In addition, since the preheating of the foam web with the gas burner and heating of the edges to be cemented by means of hot air, are carried out on the fly, in the event that the productive process is interrupted, albeit temporarily, there occurs an immediate and automatic removal of the two heating elements, which would otherwise cause the foam to melt and burn.

As regards the dimensions and the materials used, these may be any ones suitable for the intended application.

## C L A I M S

1. A method for coating metal pipes with plastics foam and film, characterized in that it comprises the steps of:

a) providing a web of foamed plastics material having a width equal to the length of a pipe to be coated;

b) pre-heating said web;

c) inserting said web along with said pipe into a partially open conical element to cause the web to adhere on the pipe and bring the edges thereof into contact along a generatrix of said pipe;

d) heating, by means of a hot fluid, said web contacting edges up to a softening temperature to thus cause said edges to weld together;

e) holding said web in contact with said pipe inside consecutively arranged sleeves the inner surfaces whereof have a plurality of holes wherethrough pressurized air is admitted to create a fluid layer having a low friction coefficient and enabling the thus coated pipe to be cooled and easily fed forward;

f) coating, on a continuous extrusion press, said web as wrapped around said pipe with a thermoplastics material forming a continuous covering film; and

g) cooling said covering film down to room temperature.

2. A method according to Claim 1, characterized in that said foam is a thermoplastics and preferably closed cell polyethylene foam.

3. A method according to Claim 1, characterized in that the edges of said foam web are welded practically up to local softening or plasticization by means of a hot air jet.

4. A method according to Claim 1, characterized in that said continuous film is preferably formed from impervious and non-permeable polyethylene which is fused integrally with said foam.

5. An apparatus for carrying out the method according to any preceding claims, characterized in that it comprises a station (10, 11, 12) for pre-heating a foamed plastics material web (5) wrapping said web around a metal pipe (1) and sealing or welding the web edges after said edges have been brought into mutual contact relationship, a cooling station equipped with cylindrical sleeves (16, 17, 18) wherethrough compressed air is circulated, and a web covering station (31) for covering said web by continuously extruding a thermoplastics material thereon to form a film (32) on said web.

6. An apparatus according to Claim 5, characterized in that said web pre-heating station (10, 11, 12) comprises a gas burner (12) the heating power whereof is a function of the web (5) advancing speed.

7. An apparatus according to Claims 5 and 6, characterized in that said web (5) and said pipe (1) are inserted and caused to advance into a cone (8) which is effective to continuously wind said web around said pipe, to bring the web side edges (9) into contact with each other.

8. An apparatus according to Claims 5 to 7, characterized in that at the area where said edges (9) contact each other, a nozzle (13) is arranged to blow air at such a temperature as to soften them and make them self-cementing.

9. An apparatus according to Claims 5 to 8, characterized in that said sleeves (16, 17, 18) made from a low friction coefficient material have a plurality of closely spaced radially throughgoing holes (26), wherethrough, from a more externally located chamber (23), pressurized air is admitted to effectively reduce the frictional drag and cool the edge weld, the air admitted through said holes (26) being collected at and discharged from a longitudinal slot (28) arranged co-extensively to the edge welding area and communicating with the outside and at least one of the heads (21, 22) of said sleeve.

10. An apparatus according to Claims 5 to 9, characterized in that said sleeves (16, 17, 18) are formed from TEFLON (tetra fluoroethylene).

11. An apparatus according to Claims 5 to 10, characterized in that downstream of said sleeves, upon completion of the welding process, the foam web coated pipe (1) enters the extruder head (31) of a press which covers it continuously with a thermoplastics material such as polyethylene forming on said foam a continuous, uniform and non-permeable film (32).

12. An apparatus according to Claims 5 to 11, characterized in that said film (32), downstream of said extruder head (31), is cooled with sprinkled water.

13. A plastics material coated metal pipe as obtained by a method according to Claims 1 to 4, characterized in that it comprises a metal pipe covered with a layer of closed cell plastics foam material and enclosed in an outer continuous and non-permeable film.

14. A pipe according to Claim 13, characterized in that it comprises a metal pipe only coated with said closed cell foam web, as wrapped around and welded along a generatrix.

Fig.1

0038974

1/4

Fig.2

Fig.3

Fig. 4

Fig. 5

Fig. 6

Fig. 7